(19) Europäisches Patentamt / European Patent Office / Office européen des brevets

(11) **EP 2 761 732 B1**

(12) **EUROPÄISCHE PATENTSCHRIFT**

(45) Veröffentlichungstag und Bekanntmachung des Hinweises auf die Patenterteilung:
**17.04.2019   Patentblatt 2019/16**

(21) Anmeldenummer: **12769912.2**

(22) Anmeldetag: **17.09.2012**

(51) Int Cl.:
*H02K 17/14* *(2006.01)*          *H02P 25/20* *(2006.01)*
*H02K 3/28* *(2006.01)*

(86) Internationale Anmeldenummer:
**PCT/EP2012/003885**

(87) Internationale Veröffentlichungsnummer:
**WO 2013/041202 (28.03.2013 Gazette 2013/13)**

(54) **System mit einem polumschaltbaren Elektromotor, einem Umrichter und einer Verschalteinheit**

System comprising a pole-changing electric motor, an inverter and a switching unit

Système comprenant un moteur électrique à changement de pôle, un iconvertisseur de fréquence et une unité de commutation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2011   DE 102011114139**

(43) Veröffentlichungstag der Anmeldung:
**06.08.2014   Patentblatt 2014/32**

(73) Patentinhaber: **SEW-EURODRIVE GmbH & Co. KG 76646 Bruchsal (DE)**

(72) Erfinder:
• **HARTMANN, Mathias**
  **DE- 85092 Kösching (DE)**
• **EPSKAMP, Torsten**
  **DE-75015 Bretten (DE)**
• **REINHARDT, Volkmar**
  **DE- 69124 Heildelberg (DE)**
• **SCHUSTER, Thomas**
  **DE- 73113 Ottenbach (DE)**

(56) Entgegenhaltungen:
EP-A1- 1 986 310          DE-A1- 1 488 263
DE-A1-102007 020 706      JP-A- H03 215 191
US-A- 4 221 999

• "1.6. Wicklungen für Polumschaltung" In: Bala, C., Fetita, Al., Lefter, V.: "Handbuch der Wickeltechnik elektrischer Maschinen", 1969, VEB Verlag Technik, Berlin, XP002715564, Seiten 171-198, Bild 1.6.14, Absatz 1.6.4., S.171, letzter Absatz

**Beschreibung**

Die Erfindung betrifft ein System mit einem polumschaltbaren Elektromotor, einem Umrichter und einer Verschalteinheit.

Ein Drehstrommotor mit Asynchronwicklung ist aus dem Stand der Technik bekannt, dass jeder Strang zwei Spulengruppen aufweist, die mit einem Einzieh-Werkzeug in einer Spuleneinzugsmaschine in Nuten des Statorgehäuses einziehbar sind. Die Statornuten verlaufen in axialer Richtung und sind in Umfangsrichtung regelmäßig voneinander beabstandet.

Aus der DE 42 42 665 A1 ist ein polumschaltbarer Asynchronmotor bekannt.

Aus der "1.6 Wicklungen für Polumschaltung" in Bala, C., Fetita, Al. Lefter, V.: Handbuch der Wickeltechnik elektrischer Maschinen, 1969, VEB Verlag Technik, Berlin, Seiten 171 - 198, sind verschiedene Polverschaltungsarten bekannt.

Aus der DE 14 88 263 A1 ist eine polumschaltbare Dreiphasen-Wechselstrommaschine bekannt, wobei durch Änderung einer Anzahl paralleler Spulengruppen drei verschiedene Polzahlen eingestellt werden können.

Aus der DE 10 2007 020706 A1 ist eine polumschaltbare Asynchronmaschine für variable Speisefrequenz bekannt, wobei durch Änderung der Anzahl paralleler Spulengruppen abhängig von der Drehzahl die Polzahl geändert wird.

Aus der EP 1 986 310 A1 ist ein elektrischer Antrieb mit variabler Frequenz bekannt, wobei bei Überschreiten eines ersten kritischen Drehzahlwertes oder Unterschreiten eines zweiten kritischen Drehzahlwertes die Anzahl paralleler Spulengruppen verändert wird.

Aus der JP H03 215191 A ist als nächstliegender Stand der Technik ein polumschaltbarer Elektromotor mit Dahlanderwicklung, eine Verschalteinheit und ein speisender Umrichter bekannt, wobei während der Umschaltung der Polzahl durch die Verschalteinheit der Motorstrom auf Null verringert wird. Ausserdem ist der Elektromotor durch die Verschalteinheit vom Umrichter galvainsch trennbar.

Aus der US 4 221 999 A ist ein polumschaltbarer Motor mit dreisträngiger Statorwicklung nach Dahlanderart bekannt, wobei die Stränge der Statorwicklung konzentrische Spulen aufweisen, wobei eine Verschaltungseinheit zur Veränderung der Polzahl im Verhältnis 2:1, wobei zwischen Dreieck und Doppelstern umgeschaltet wird.

Der Erfindung liegt daher die Aufgabe zugrunde, einen Antrieb beim kompakter Ausführung energiesparend zu betreiben.

Erfindungsgemäß wird die Aufgabe durch ein System nach Anspruch 1 gelöst.

Von Vorteil ist dabei, dass durch das Ändern der Anzahl parallel geschalteter Spulengruppen bei jeder Drehzahl des Antriebs eine derartige Anzahl wählbar ist, dass der Motorstrom und somit die Verlustenergie möglichst klein ist. Die Verlustenergie umfasst dabei die Ohmsche Wärme, Ummagnetisierungsverluste in den Blechpaketen des Motors und Schaltverluste des Umrichters.

Von Vorteil ist bei der Erfindung, dass die Gesamtverlustleistung des Antriebs, umfassen Umrichter und Motor, reduzierbar ist und gleichzeitig ein sehr kompakter Antrieb verwendbar ist. Denn der Umrichter muss nur einen vergleichsweise geringen Strom zur Verfügung stellen.

Erfindungsgemäß sind von einem Umrichter herführende Leitungen mit den verschalteten Spulengruppen mittels der Verschaltungseinheit verbindbar,

so dass die parallel und/oder in Reihe geschalteten Spulengruppen aus der Spannungsquelle versorgbar sind. Von Vorteil ist dabei, dass mittels der Verschaltungseinheit die Verbindung herstellbar und auch trennbar ist. Hierzu umfasst die Verschaltungseinheit eine Steuereinheit, welche Ansteuersignale erzeugt für die von der Verschaltungseinheit ebenfalls umfassten steuerbaren Schalter, welche die Verschaltung bewirken.

Erfindungsgemäß weist die Verschaltungseinheit steuerbare Schalter auf, mit welchen die Verschaltung der Spulengruppen bewirkbar ist. Von Vorteil ist dabei, dass die Verschaltung in einfacher Weise und schnell veränderbar ist.

Erfindungsgemäß ist durch Öffnen von Schaltern der Verschaltungseinheit der Motor von einem ihn speisenden Umrichter galvanisch trennbar. Von Vorteil ist dabei, dass die Sicherheit erhöhbar ist. Wenn beispielsweise ein Schalter einen Kurzschluss als Fehlfunktion verursacht, ist ein Auftrennen der Leitungen, also ein Abtrennen der Spannungsquelle, ermöglicht.

Erfindungsgemäß sind die Spulen der Statorwicklung nach Art einer Dahlanderschaltung verschaltet, so dass die Polzahl umschaltbar ist, insbesondere mittels der Verschaltungseinheit, insbesondere wobei die Anschlüsse der Spulen zur Verschaltungseinheit geführt sind. Von Vorteil ist dabei, dass der Motor polumschaltbar ist und zusätzlich auch die Anzahl der parallelen Spulengruppen veränderlich sind.

Erfindungsgemäß weist der Motor

in einer ersten Schaltart der Verschaltungseinheit jeder Strang jeweils vier, in Reihe geschalteten Gruppen auf, also ist nur eine einzige "parallele Gruppe" im Strang vorhanden,

in einer zweiten Schaltart der Verschaltungseinheit weist jeder Strang jeweils eine Reihenschaltung von zwei Parallelschaltungen auf, wobei jede Parallelschaltung aus zwei zueinander parallel geschalteten Gruppen besteht, so dass also jeder Strang zwei "parallele Gruppen" aufweist,

in einer dritten Schaltart der Verschaltungseinheit weist jeder Strang jeweils eine Parallelschaltung aus vier zueinander parallel geschalteten Gruppen auf, so dass also jeder Strang vier "parallele Gruppen" aufweist. Von Vorteil ist dabei, dass die Drehmoment-Drehzahl-Kennlinie des Motors aus drei Kennlinien-Abschnitten zusammensetzbar ist.

Wichtige Merkmale bei einem Verfahren zum Betreiben eines Elektromotors, insbesondere eines polumschaltbaren Motors, sind, dass die Statorwicklung des Motors aus Strängen besteht, insbesondere aus drei Strängen (U, V, W), wobei jeder Strang Spulengruppen aufweist,

wobei jede Spulengruppe aus Spulen, insbesondere aus drei konzentrisch angeordnete Spulen, besteht,

wobei die Anschlüsse jeder Spulengruppe zu einer Verschaltungseinheit geführt sind,

wobei die Anzahl parallel geschalteter Spulengruppen eines jeweiligen Strangs von der Verschaltungseinheit bewirkten Verschaltung abhängig von dem Wert einer physikalischen Größe, insbesondere Drehzahl, des Elektromotors verändert wird.

wobei mittels der Verschaltungseinheit unterschiedliche Verschaltungen bewirkt werden, so dass die Anzahl verändert wird, insbesondere während des Betriebs des Elektromotors.

Von Vorteil ist dabei, dass zu jeder Drehzahl eine Verschaltungsart wählbar ist, die optimale Betriebsbedingungen gewährleistet.

Erfindungsgemäß wird die Anzahl abhängig von der Drehzahl verändert, insbesondere bei Überschreiten eines ersten kritischen Wertes oder Unterschreiten eines zweiten kritischen Wertes die Anzahl verändert wird,

insbesondere wobei die erste und die zweite Anzahl gleich sind oder sich um einen zur Bildung einer Hysterese vorgesehenen Betrag unterscheiden. Von Vorteil ist dabei, dass Schwingungen und Instabilitäten vermieden sind. Außerdem ist nur ein Drehzahlsensor am Antrieb notwendig, dessen Signal der die Schalter der die Verschaltungseinheit ansteuernden Steuereinheit zugeführt werden muss. Als Drehzahlsensor ist auch ein von einer Steuereinheit eines Umrichter geschätzter Drehzahlwert verwendbar. Somit ist es also ausreichend, Motorstrom und Motorspannung zu erfassen und einer Steuereinheit eines Umrichters zuzuführen.

Bei einer vorteilhaften Ausgestaltung wird die Anzahl derart gering gewählt, dass unter Einhaltung der Spannungsgrenze und der Stromgrenze der zur Erzeugung des Drehmoments notwendige Motorstrom möglichst klein ist. Von Vorteil ist dabei, dass Verlustenergieen minimiert werden.

Erfindungsgemäß wird vor dem Ändern der Anzahl, also vor dem Ändern des Schaltzustands der Verschaltungseinheit, der Motorstrom auf Null hin geregelt und danach das Ändern durchgeführt, wonach wiederum der Strom erhöht wird. Von Vorteil ist dabei, dass Schaltverluste beim Schalten verringerbar sind.

Wichtige Merkmale bei dem polumschaltbaren Motor sind, dass die Statorwicklung aus Strängen besteht, wobei jeder Strang Spulengruppen aufweist, wobei jede Spulengruppe aus mindestens zwei Teilspulengruppen gebildet ist, wobei die Spulen einer ersten Teilspulengruppe konzentrisch gewickelt angeordnet sind, wobei die Spulen einer zweiten Teilspulengruppe konzentrisch gewickelt angeordnet sind, wobei die erste und die zweite Teilspulengruppe nebeneinander und/oder in Umfangsrichtung überlappend angeordnet sind.

Erfindungsgemäß ist von Vorteil dabei, dass dasselbe Werkzeug zum Einzug der Spulen in die Statornuten verwendbar ist wie bei einem Motor nach Stand der Technik, der nicht polumschaltbar ist und/oder eine Drehstromwicklung nach Stand der Technik aufweist. Somit ist mit demselben Werkzeug ein polumschaltbarer und ein Motor mit klassischer Drehstromwicklung fertigbar.

Erfindungsgemäß sind die Spulen der ersten Teilspulengruppe in zwei Gruppen von Statornuten eingezogen, wobei die Statornuten in jeder Gruppe in Umfangsrichtung voneinander regelmäßig beabstandet sind,

wobei die Gruppen in Umfangsrichtung voneinander beabstandet sind. Von Vorteil ist dabei, dass das Werkzeug zum Einziehen der Spulen definiert ist durch den Gruppenabstand in Umfangsrichtung und den Abstand in Umfangsrichtung innerhalb der jeweiligen Gruppe.

Erfindungsgemäß sind die Statornuten der ersten Teilspulengruppe in gleicher Weise beabstandet und somit sind die Spulen der ersten Teilspulengruppe vom gleichen Werkzeug in die zugehörigen Statornuten einziehbar wie eine Spulengruppe eines Stranges einer Drehstromwicklung eines nicht polumschaltbaren Motors, insbesondere eines Motors nach Stand der Technik. Von Vorteil ist dabei, dass dasselbe Werkzeug zum Einziehen der Spulen verwendbar ist bei dem erfindungsgemäßen polumschaltbaren Motor und bei einem Motor mit klassischer Drehstromwicklung nach Stand der Technik.

Erfindungsgemäß weist der polumschaltbare Motor eine polumschaltbare Dahlanderwicklung auf, insbesondere eine m/n Dahlander-Wicklung

wobei m und n jeweils ganze Zahlen größer als 2 sind, insbesondere wobei m = 4 und n = 2 ist. Von Vorteil ist dabei, dass der erfindungsgemäße Motor ohne zusätzliche Werkzeuge fertigbar ist und trotzdem polumschaltbar ist, obwohl das Werkzeug für einen nichtpolumschaltbaren Motor mit klassischer Drehstromwicklung, also nach Stand der Technik, verwendbar ist.

Die Erfindung wird nun anhand von schematischen Abbildungen näher erläutert:

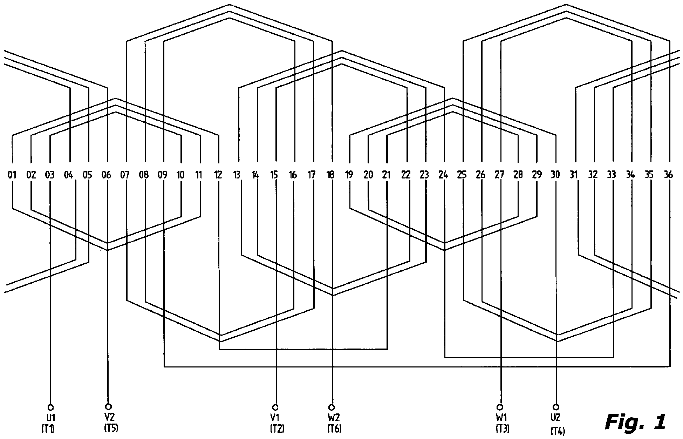

In der Figur 1 ist das im Stand der Technik bekannte Wickelschema eines Elektromotors, der als Drehstrommotor ausgeführt ist, gezeigt.

In Figur 1 sind die in Umfangsrichtung regelmäßig voneinander beabstandeten, in axialer Richtung sich erstreckenden Statornuten in Umfangsrichtung durchnummeriert von 1 bis 36, wobei die Statornut 1 wiederum auf die Statornut 36 folgt, da der Motor als rotatorischer Motor ausgeführt ist.

Das Wickelschema bezieht sich auf einen rotatorischen Motor.

In Figur 1 sind für die Phasen U, V und W des Drehstrommotors jeweils ein Wickelstrang vorgesehen, der auch als Strang bezeichenbar ist.

Jeder Strang enthält zwei Spulengruppen, wobei jede Spulengruppe aus drei konzentrisch angeordnete Spulen besteht. Beispielsweise bilden die Spule (1, 12), die Spule (2, 11) und die Spule (3, 10) eine erste Spulengruppe des Stranges der Phase U. Die Spule (19, 30), die Spule (20, 29) und die Spule (21, 28) bilden die zweite Spulengruppe des Stranges der Phase U. Beide Spulengruppen sind konzentrisch ausgeführt.

In entsprechender Weise sind die Stränge der Phasen V und W ausgeführt.

Das Werkzeug der Spuleneinziehmaschine drückt die außerhalb des Statorgehäuses gewickelten Wicklungen beim Einführen in den Stator in die zugehörigen Statornuten. Dieses Werkzeug zieht also die Spulengruppe ((1, 12), (2, 11) und (3, 10)) in die Statornuten ein. Das Werkzeug ist dabei definiert durch die Anzahl der Statornuten, also zwei Dreiergruppen, und die Beabstandung der Dreiergruppen in Umfangsrichtung.

Bei dem erfindungsgemäßen Ausführungsbeispiel weist jeder eine Zusammenschaltung von Gruppen auf, wobei alle Gruppen zusammengeschaltet sind, die zu einer Phase des Stators der Elektromaschine gehören.

Dabei ist die Zusammenschaltung eine Reihenschaltung oder eine Parallelschaltung dieser Gruppen oder eine gemischte Verschaltung.

Jede Gruppe umfasst wiederum zwei oder mehr Spulen.

Wenn beispielsweise ein Strang aus einer Reihenschaltung besteht, die aus vier, in Reihe geschalteten Gruppen besteht, wird von nur einer einzigen "parallelen Gruppe" im Strang gesprochen.

Wenn ein Strang aus einer Parallelschaltung besteht, die aus zwei, parallel geschalteten Gruppen besteht, wird von zwei "parallelen Gruppen" im Strang gesprochen.

Wenn beispielsweise ein Strang aus vier parallel geschalteten Gruppen besteht, wird von vier "parallelen Gruppen" im Strang gesprochen.

Die jeweiligen elektrischen Anschlussleitungen jeder Gruppe sind an eine Verschaltungseinheit herausgeführt. Die Verschaltungseinheit weist steuerbare Schalter auf, mit denen die Verschaltung, also die Reihenschaltung oder Parallelschaltung von Gruppen eines jeweiligen Strangs ausführbar ist.

Somit ist je nach Schaltungsart eine verschiedenen Anzahl von "parallelen Gruppen " erreichbar.

Die Elektromaschine weist eine jeweilige Drehmoment-Drehzahl-Kennlinie auf, die durch das Zusammensetzen einzelner Drehmomentkennlinienabschnitte von Drehmomentkennlinien entsteht, welche zu einer jeweiligen Schaltungsart gehören.

Dies heißt, dass bei nur einer einzigen "parallelen Gruppe " die erste Kennlinie wirksam ist, bei zwei "parallelen Gruppen" eine zweite Kennlinie wirksam ist und bei vier "parallelen Gruppen" eine dritte Kennlinie wirksam ist.

Nach Erfassung der Drehzahl schaltet die Verschaltungseinheit bei niedrigen Drehzahlen jeden Strang derart, dass er jeweils nur eine einzige "parallele Gruppe" aufweist. Bei Überschreiten eines ersten kritischen Drehzahlwertes ändert die Verschaltungseinheit die Verschaltung derart, dass zwei "parallele Gruppen" wirksam sind in jedem Strang. Somit wird statt des Abschnitts der ersten Kennlinie ein Abschnitt der zweiten Kennlinie wirksam. Denn die erste Kennlinie schneidet die zweite Kennlinie im Bereich des ersten kritischen Drehzahlwertes. Bei Überschreiten eines zweiten höheren Drehzahlwertes, die dem Schnittpunkt der zweiten Kennlinie mit der dritten Kennlinie entspricht, ändert die Verschaltungseinheit die Verschaltung derart, dass statt zwei nun drei "parallele Gruppen" wirksam sind in jedem Strang.

Somit ist also ermöglicht, unter Einhaltung der Spannungsgrenze und abhängig vom Betriebspunkt des Elektromotors, also der Elektromaschine, möglichst wenige parallel versorgte Gruppen in jedem Strang zu betreiben und somit den Strom in den Halbleitern des Frequenzumrichters zu reduzieren und daher einen höheren Systemwirkungsgrad zu realisieren.

Bei einem Schaltvorgang der Verschaltungseinheit wird kurz vor dem Ändern des Schaltzustandes der Schalter der Verschaltungseinheit der Ausgangsstrom des Umrichters auf Null gebracht oder zumindest auf einen entsprechend kleinen Wert gebracht.

Im Folgenden wird ein Ausführungsbeispiel konkret beschrieben:

Der Ist-Strom I und die Ist-Spannung U werden erfasst. Der maximal zulässige Strom ist $I_{max}$ und die maximal zulässige Spannung $U_{max}$.

Die Werte $k_{I_-}$, $k_{I_+}$, $k_{U_-}$, $k_{U_+}$ sind Parameter und liegen zwischen 0 und 1, wobei

$$k_{I_-} < k_{I_+} \text{ und } k_{U_-} < k_{U_+}$$

gilt.

In der Reihenfolge steigender Drehzahl werden die verschiedenen Schaltzustände hintereinander aufgereiht. Dabei wird in einer Zahlenfolge, insbesondere Vektor, die jeweilige zugehörige Anzahl der parallelen Gruppen notiert: $\overrightarrow{n_{par}}$ ... Vektor der möglichen Anzahlen paralleler Gruppen (Bsp: [1,2,4])

Die i-te Komponente dieser Zahlenfolge ist die aktuelle Anzahl paralleler Gruppen:

$$n_{par}^{ist} = \overrightarrow{n_{par}}_i \, ... \, i - \text{te Komponente von } \overrightarrow{n_{par}}$$

Die Schaltlogik arbeitet dann nach den folgenden Bedingungen:

A) Vermindere Anzahl paralleler Gruppen, wenn

1) $i > 1$ <u>und</u>

2) $I > k_{I-} \cdot I_{max}$ <u>und</u>

3) $U < \dfrac{\overrightarrow{n_{par}}_{i-1}}{n_{par}^{ist}} \cdot k_{U_-} \cdot U_{max}$

B) Erhöhe Anzahl paralleler Gruppen, wenn

1) $i < n_{par}^{max}$ <u>und</u>

2) $U > k_{U_+} \cdot U_{max}$ <u>und</u>

3) $I < \dfrac{n_{par}^{ist}}{\overrightarrow{n_{par}}_{i+1}} \cdot k_{I_+} \cdot I_{max}$

Dabei stellt die jeweils erste Bedingung sicher, dass eine Verminderung bzw. Erhöhung der Anzahl der parallelen Gruppen überhaupt möglich ist. Die zweite Bedingung stellt das Hauptkriterium dar und die dritte Bedingung stellt sicher, dass durch die Änderung der Anzahl paralleler Gruppen die Spannungs- bzw. Stromgrenze nicht überschritten wird. Durch die Bedingungen $k_{I-} < k_{I+}$ und $k_{U-} < k_{U+}$ wird eine Hysterese realisiert, also das häufige Umschalten in kritischen Bereichen vermieden.

Bei einem weiteren erfindungsgemäßen Ausführungsbeispiel wird $k_{I-} = 0$ verwendet und es wird die Schaltlogik nach Möglichkeit die Anzahl paralleler Gruppen reduzieren, wodurch der ausgangsseitige Umrichterstrom und somit die Verlustleistung des Umrichters minimiert werden. Ein solche Parameterwahl erhöht somit den Systemwirkungsgrad.

Für das erfindungsgemäße Ausführungsbeispiel wird an dem Elektromotor ein Drehzahlsensor angeordnet, so dass der erfasste Drehzahlwert der Steuerelektronik der Verschaltungseinheit zuführbar ist und drehzahlabhängig die Verschaltung ansteuerbar ist. Wichtig ist bei der Erfindung auch, dass das Ändern der Verschaltung während des Betriebs des Elektromotors ausgeführt wird.

Bei dem erfindungsgemäßen Ausführungsbeispiel wird bei Erniedrigen der Drehzahl eine Hysterese berücksichtigt, so dass bei Unterschreiten eines etwas niedrigeren Drehzahlwerts als dem ersten beziehungsweise zweiten Drehzahlwert die Verschaltung rückgeändert wird.

Mittels Öffnen von Schaltern, insbesondere mittels Öffnen von allen Schalter der Verschaltungseinheit, ist eine galvanische Trennung zwischen Elektromotor und dem den Elektromotor speisenden Umrichter ermöglicht.

Bei dem erfindungsgemäßen Ausführungsbeispiel wird zusätzlich die Polzahl der Elektromaschine drehzahlabhängig verändert. Dies ist besonders einfach ermöglicht, wenn die Statorwicklungen des Motors nach Art einer Dahlanderschaltung aufgebaut sind. Somit ist der Elektromotor als Asynchron-Drehstrommotor in einfacher Weise aufgebaut, wobei die Polzahländerung ebenfalls in einfacher Weise mittels der Verschaltungseinheit ausführbar ist.

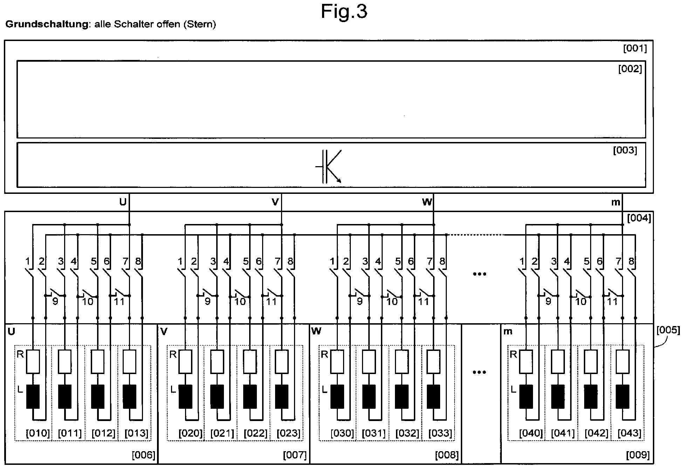

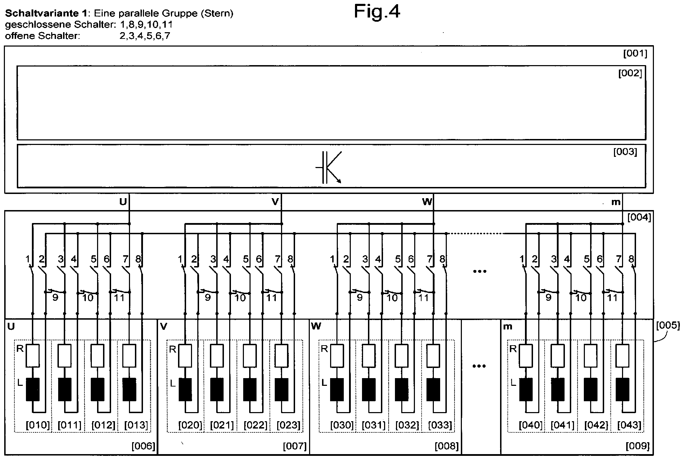

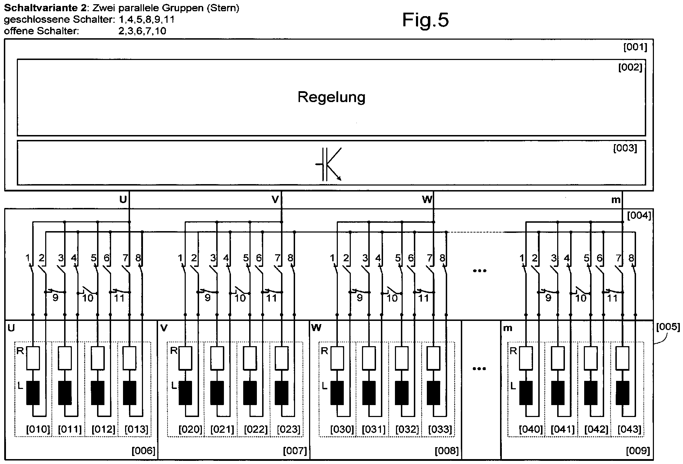

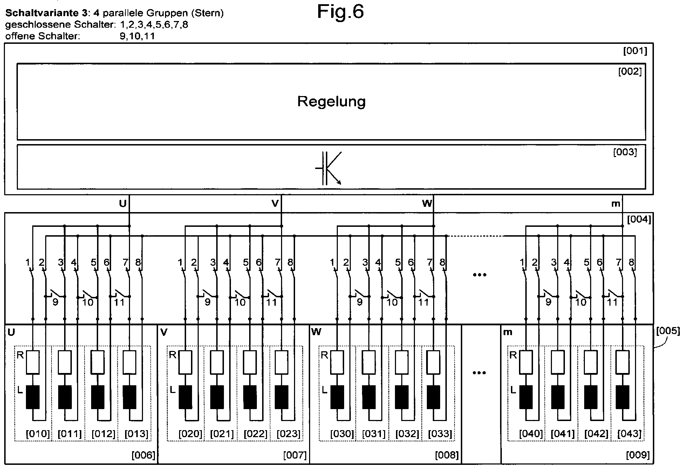

Das erfindungsgemäße Ausführungsbeispiel ist in den Figuren 3 bis 6 dargestellt, wobei in den Figuren 3, 4, 5 und 6 jeweils ein verschiedener Verschaltungsart realisiert ist, indem jeweilige Schalter geöffnet oder geschlossen sind: In der Figur 3 ist eine erfindungsgemäße, von einem Umrichter 1 gespeiste Verschaltungseinheit gezeigt, wobei der Umrichter eine Steuerelektronik 2 und einen von dieser angesteuerten Wechselrichter 3 aufweist, so dass eine Spannungsquelle mit den Phasen U, V, W, ... m die Verschaltungseinheit versorgt. Dabei ist jede Phase mit einem Strang der Elektromaschine, insbesondere Elektromotor, verbunden, wobei jedem Strang Schalter (1, 2, 3,4 ,5, 6, 7, 8,9 10, 11) zugeordnet sind. Der erste Strang weist die Spulengruppen (010, 011, 012, 013) auf. Der zweite Strang weist die Spulengruppen (020, 021, 022, 023) auf. Der dritte Strang weist die Spulengruppen (030, 031, 032, 033) auf. Der m-te Strang weist die Spulengruppen (040, 041, 042, 043) auf. Die Spulengruppen sind in Sternschaltung angeordnet. Alle Schalter jedes Strangs sind geöffnet, so dass eine galvanische Trennung des Umrichters von der Elektromaschine besteht.

In der Figur 4 sind im Unterschied zur Figur 3 die Schalter 1, 8, 9, 10, 11 geschlossen, so dass in jedem Strang eine einzige parallele Spulengruppe realisiert ist.

In der Figur 5 sind im Unterschied zur Figur 3 die Schalter 1, 4, 5, 8, 9, 11 geschlossen, so dass in jedem Strang zwei parallele Spulengruppen realisiert sind.

In der Figur 6 sind im Unterschied zur Figur 3 die Schalter 1, 2, 3, 4, 5, 6, 7, 8 geschlossen, so dass in jedem Strang vier parallele Spulengruppen realisiert sind.

Bei einem weiteren erfindungsgemäßen Ausführungsbeispiel wird die Elektromaschine im Unterschied zu den Figuren 3 bis 6 in Dreieckschaltung verschaltet, wobei dann der Schalter 8 nicht immer geschlossen bleiben muss sondern auch geöffnet sein kann.

**Bezugszeichenliste**

U1, V1, W1 Statorwicklungsanschlüsse
U2, V2, W2 Statorwicklungsanschlüsse

001 Umrichter
002 Steuerelektronik
003 Wechselrichter
004 Verschaltungseinheit
005 Elektromaschine mit m Strängen

006 zur Phase U zugeordneter Strang
007 zur Phase V zugeordneter Strang
008 zur Phase W zugeordneter Strang
009 zur Phase m zugeordneter Strang

010 Spulengruppe 1 von Strang U
011 Spulengruppe 2 von Strang U
012 Spulengruppe 3 von Strang U
013 Spulengruppe 4 von Strang U

020 Spulengruppe 1 von Strang V
021 Spulengruppe 2 von Strang V
022 Spulengruppe 3 von Strang V
023 Spulengruppe 4 von Strang V

030 Spulengruppe 1 von Strang W
031 Spulengruppe 2 von Strang W
032 Spulengruppe 3 von Strang W
033 Spulengruppe 4 von Strang W

040 Spulengruppe 1 von Strang m
041 Spulengruppe 2 von Strang m
042 Spulengruppe 3 von Strang m
043 Spulengruppe 4 von Strang m

**Patentansprüche**

1. System mit einem polumschaltbaren Elektromotor (005), einem Umrichter (001) und einer Verschaltungseinheit (004), wobei der polumschaltbare Elektromotor (005) eine Statorwicklung aufweist, die aus Strängen (006 - 009) besteht,

wobei jeder Strang vier Spulengruppen (010-013, 020 - 023, 030 - 033, 040 - 043) aufweist,

wobei jede Spulengruppe aus mindestens zwei Teilspulengruppen gebildet ist,

wobei die Spulen einer ersten Teilspulengruppe konzentrisch gewickelt angeordnet sind,

wobei die Spulen einer zweiten Teilspulengruppe konzentrisch gewickelt angeordnet sind,

wobei die erste und die zweite Teilspulengruppe nebeneinander und/oder in Umfangsrichtung überlappend angeordnet sind,

wobei die Spulen der ersten Teilspulengruppe in zwei Gruppen von Statornuten eingezogen sind,

wobei die Statornuten in jeder Gruppe in Umfangsrichtung voneinander regelmäßig beabstandet sind,

wobei die Gruppen von Statornuten in Umfangsrichtung voneinander beabstandet sind, wobei die Statornuten der ersten Teilspulengruppe in gleicher Weise beabstandet sind und somit die Spulen der ersten Teilspulengruppe vom gleichen Werkzeug in die zugehörigen Statornuten einziehbar sind wie eine Spulengruppe eines Stranges einer Drehstromwicklung eines nicht polumschaltbaren Motors,

wobei der polumschaltbare Elektromotor (005) eine polumschaltbare Dahlanderwicklung aufweist,

wobei die Anschlüsse (U1, V1, W1, U2, V2, W2) jeder Spulengruppe (010-013, 020 - 023, 030 - 033, 040 - 043) zu der Verschaltungseinheit (004) mit steuerbaren Schaltern (1-11) geführt sind,

wobei die von der Verschaltungseinheit (004) bewirkte Verschaltung eine Anzahl parallel geschalteter Spulengruppen eines jeweiligen Strangs aufweist,

wobei mittels der Verschaltungseinheit unterschiedliche Verschaltungen bewirkbar sind, so dass die Anzahl parallel geschalteter Spulengruppen veränderbar ist,

wobei in einer ersten Schaltart der Verschaltungseinheit jeder Strang jeweils vier, in Reihe geschalteten Spulengruppen aufweist, also nur eine einzige "parallele Spulengruppe" im Strang vorhanden ist,

in einer zweiten Schaltart der Verschaltungseinheit jeder Strang jeweils eine Reihenschaltung von zwei Parallelschaltungen aufweist, wobei jede Parallelschaltung aus zwei zueinander parallel geschalteten Spulengruppen besteht, so dass also jeder Strang zwei "parallele Spulengruppen" aufweist,

in einer dritten Schaltart der Verschaltungseinheit jeder Strang jeweils eine Parallelschaltung aus vier zueinander parallel geschalteten Spulengruppen besteht, so dass also jeder Strang vier "parallele Spulengruppen" aufweist,

wobei durch Öffnen von Schaltern (1-11) der Verschaltungseinheit (004) der Elektromotor (005) von dem ihn speisenden Umrichter galvanisch trennbar ist,

wobei die Anzahl parallel geschalteter Spulengruppe eines jeweiligen Strangs von der Verschaltungseinheit bewirkten Verschaltung abhängig von dem Wert der Drehzahl des Elektromotors (005) veränderbar ist,

wobei vor dem Ändern der Anzahl parallel geschalteter Spulengruppen, also vor dem Ändern des Schaltzustands der Verschaltungseinheit, der Motorstrom auf Null verringerbar ist, so dass danach das Ändern des Schaltzustands durchführbar ist, wonach wiederum der Strom erhöht werden kann.

## Claims

1. System comprising a pole-changing electric motor (005), an inverter (001) and a connection unit (004), wherein the pole-changing electric motor (005) comprises a stator winding consisting of winding phases (006-009),

   wherein each winding phase comprises four coil groups (010-013, 020-023, 030-033, 040-043),

   wherein each coil group is formed from at least two coil sub-groups,

   wherein the coils of a first coil sub-group are arranged in a concentrically wound manner,

   wherein the coils of a second coil sub-group are arranged in a concentrically wound manner,

   wherein the first and second coil sub-groups are arranged next to one another and/or so as to overlap in the circumferential direction,

   wherein the coils of the first coil sub-group are retracted into two groups of stator grooves,

   wherein the stator grooves in each group are regularly spaced apart in the circumferential direction,

   wherein the groups of stator grooves are spaced apart in the circumferential direction,

   wherein the stator grooves of the first coil sub-group are spaced apart in the same manner,

   and so the coils of the first coil sub-group can be retracted into the associated stator grooves by the same tool as a coil group of a winding phase of a three-phase winding of a non-pole-changing motor,

   wherein the pole-changing electric motor (005) comprises a Dahlander pole-changing winding,

   wherein the terminals (U1, V1, W1, U2, V2, W2) of each coil group (010-013, 020-023, 030-033, 040-043) are led to the connection unit (004) having controllable switches (1-11),

   wherein the connection produced by the connection unit (004) comprises a plurality of coil groups connected in parallel of a particular winding phase,

   wherein different connections can be produced by means of the connection unit, and so the number of coil groups connected in parallel can be changed,

wherein, in a first switching mode of the connection unit, each winding phase comprises four coil groups connected in series, i.e. just one "parallel coil group" is provided in the winding phase,

in a second switching mode of the connection unit, each winding phase comprises a series circuit of two parallel circuits, wherein each parallel circuit consists of two coil groups connected in parallel, and so each winding phase comprises two "parallel coil groups",

in a third switching mode of the connection unit, each winding phase comprises a parallel circuit consisting of four coil groups connected in parallel, and so each winding phase comprises four "parallel coil groups",

wherein, by opening switches (1-11) of the connection unit (004), the electric motor (005) can be galvanically isolated from the inverter powering it,

wherein the number of coil groups connected in parallel of a particular winding phase can be changed by the connection produced by the connection unit, depending on the value of the speed of the electric motor (005),

wherein, before the number of coil groups connected in parallel is changed, i.e. before the switching state of the connection unit is changed, the motor current can be lowered to zero, such that the switching state can be changed subsequently, after which the current can be increased again.

## Revendications

1. Système comprenant un moteur électrique à pôles commutables (005), un variateur (001) et une unité de connexion (004), le moteur électrique à pôles commutables (005) présentant un enroulement statorique constitué de phases (006 - 009),

dans lequel chaque phase présente quatre groupes de bobines (010 - 013, 020 - 023, 030 - 033, 040 - 043),

dans lequel chaque groupe de bobines est formé d'au moins deux sous-groupes de bobines,

dans lequel les bobines d'un premier sous-groupe de bobines sont enroulées concentriquement,

dans lequel les bobines d'un deuxième sous-groupe de bobines sont enroulées concentriquement,

dans lequel les premier et deuxième sous-groupes de bobines sont disposés côte à côte et/ou se chevauchent dans la direction circonférentielle,

dans lequel les bobines du premier sous-groupe de bobines sont insérées dans deux groupes d'encoches de stator,

dans lequel les encoches de stator dans chaque groupe sont régulièrement espacées les unes des autres dans la direction circonférentielle,

dans lequel les groupes d'encoches de stator sont espacés les uns des autres dans la direction circonférentielle,

dans lequel les encoches de stator du premier sous-groupe de bobines sont espacées de la même manière et ainsi les bobines du premier sous-groupe de bobines peuvent être insérées dans les encoches de stator associées par le même outil qu'un groupe de bobines d'une phase d'un enroulement triphasé d'un moteur à pôles non commutables,

dans lequel le moteur électrique à pôles commutables (005) présente un enroulement Dahlander à pôles commutables,

dans lequel les connexions (U1, V1, W1, U2, V2, W2) de chaque groupe de bobines (010 - 013, 020 - 023, 030 - 033, 040 - 043) sont menées vers l'unité de connexion (004) par des commutateurs commandables (1-11),

dans lequel la connexion produite par l'unité de connexion (004) présente un certain nombre de groupes de bobines d'une phase respective connectés en parallèle,

dans lequel l'unité de connexion permet de produire différentes connexions, de sorte que le nombre de groupes de bobines connectés en parallèle peut être modifié,

dans lequel, dans un premier mode de commutation de l'unité de connexion, chaque phase présente quatre groupes de bobines connectés en série, c'est-à-dire qu'un seul « groupe de bobines parallèles » est présent dans la phase,

dans un deuxième mode de commutation de l'unité de connexion, chaque phase présente un circuit série de deux circuits parallèles, chaque circuit parallèle étant constitué de deux groupes de bobines connectés en parallèle, de sorte que chaque phase présente deux « groupes de bobines parallèles »,

dans un troisième mode de commutation de l'unité de connexion, chaque phase est constituée d'un circuit parallèle de quatre groupes de bobines connectés en parallèle, de sorte que chaque phase présente quatre « groupes de bobines parallèles »,

dans lequel le moteur électrique (005) peut être séparé galvaniquement du variateur qui l'alimente en ouvrant les commutateurs (1-11) de l'unité de connexion (004),

dans lequel le nombre de groupes de bobines connectés en parallèle d'une phase respective de la connexion produite par l'unité de connexion peut être modifié en fonction de la valeur de la vitesse de rotation du moteur électrique (005),

dans lequel le courant de moteur peut être diminué à zéro avant la modification du nombre de groupes de bobines connectés en parallèle, c'est-à-dire avant la modification de l'état de commutation de l'unité de connexion, de sorte que la modification de l'état de commutation peut être effectuée ensuite, après quoi le courant peut à nouveau être augmenté.

Fig. 1

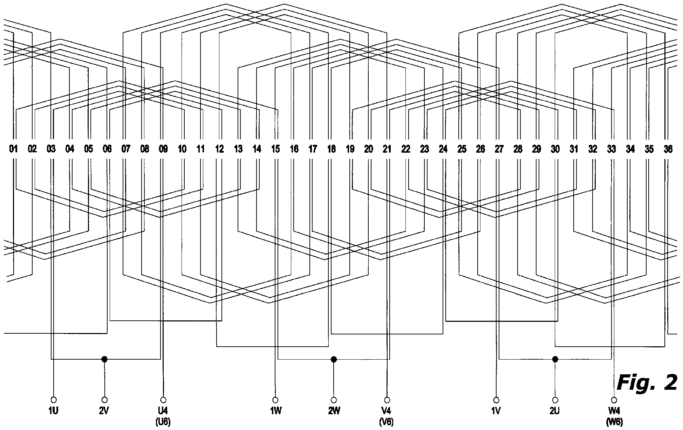

**Fig. 2**

01 02 03 04 05 06 07 08 09 10 11 12 13 14 15 16 17 18 19 20 21 22 23 24 25 26 27 28 29 30 31 32 33 34 35 36

1U    2V    U4 (U6)    1W    2W    V4 (V6)    1V    2U    W4 (W6)

# Fig.3

**Grundschaltung**: alle Schalter offen (Stern)

**Schaltvariante 1**: Eine parallele Gruppe (Stern)
geschlossene Schalter: 1,8,9,10,11
offene Schalter: 2,3,4,5,6,7

# Fig.4

**Schaltvariante 2**: Zwei parallele Gruppen (Stern)
geschlossene Schalter: 1,4,5,8,9,11
offene Schalter:     2,3,6,7,10

Fig.5

**Schaltvariante 3**: 4 parallele Gruppen (Stern)
geschlossene Schalter: 1,2,3,4,5,6,7,8
offene Schalter:      9,10,11

# Fig.6

**IN DER BESCHREIBUNG AUFGEFÜHRTE DOKUMENTE**

**In der Beschreibung aufgeführte Patentdokumente**

- DE 4242665 A1
- DE 1488263 A1
- DE 102007020706 A1
- EP 1986310 A1
- JP H03215191 A
- US 4221999 A

**In der Beschreibung aufgeführte Nicht-Patentliteratur**

- 1.6 Wicklungen für Polumschaltung. **BALA, C. ; FETITA, AL ; LEFTER, V.** Handbuch der Wickeltechnik elektrischer Maschinen. VEB Verlag Technik, 1969, 171-198